# EUROPEAN PATENT SPECIFICATION

(11) **EP 0 640 780 B1**
(45) Date of publication and mention of the grant of the patent: **12.07.2000**
(21) Application number: 94113444.7
(22) Date of filing: 29.08.1994
(51) Int. Cl.: F16H 61/02, F16H 63/44

(54) **Shift control system for automatic transmission**
Schaltsteuerung für ein automatisches Getriebe
Système de commande à changement de vitesses pour une transmission automatique

(30) Priority: 30.08.1993 JP 23735393
(43) Date of publication of application: 01.03.1995
(73) Proprietor: AISIN AW CO., LTD., Anjo-shi Aichi-ken (JP)
(72) Inventor: Tabata, Atsushi, Toyota-shi, Aichi-ken (JP); Hojo, Yasuo, Toyota-shi, Aichi-ken (JP); Kaigawa, Masato, Toyota-shi, Aichi-ken (JP); Kimura, Hiromichi, Toyota-shi, Aichi-ken (JP); Oba, Hidehiro, Toyota-shi, Aichi-ken (JP); Tsukamoto, Kazumasa, Anjo-shi, Aichi-ken (JP); Hayabuchi, Masahiro, Anjo-shi, Aichi-ken (JP); Ando, Masahiko, Anjo-shi, Aichi-ken (JP); Yamamoto, Yoshihisa, Anjo-shi, Aichi-ken (JP)
(74) Representative: VOSSIUS & PARTNER

(56) References cited:
- US-A- 4 346 626
- US-A- 4 694 709
- US-A- 4 829 853
- US-A- 4 879 925
- US-A- 4 984 485
- US-A- 5 334 114
- US-A- 5 351 577

## Description

This invention relates to a system for controlling shifting of an automatic transmission, and especially to a shift control system for an automatic transmission, said shift control system being constructed so that at a predetermined speed stage, rotation of an output shaft in a direction opposite to a direction in which an associated vehicle should run at the predetermined speed stage is inhibited.

The function that when a predetermined speed stage is set, rotation of an output shaft in a direction opposite to a direction in which an associated vehicle should run at the predetermined speed stage is known, for example, as the hill-holding function. In a snow mode in which a vehicle starts at a second speed, for example, the running torque is low. If one attempts to start the vehicle from the state that the vehicle is at a stop on an uphill, there is the potential problem that the vehicle may move down due to insufficiency in torque. It is therefore the above function that the state of engagement of a friction engagement device is set to prevent reverse rotation of the output shaft at the second speed. A system for conducting control of this type is disclosed in Japanese Patent Application Laid-Open (Kokai) No. SHO 62-11051.

In the case of an automatic transmission equipped, on an input side of a shifting unit for setting plural speed ranges including a reverse range, with a secondary shifting unit (for example, an overdrive unit) in which a low speed stage is set by engaging a one-way clutch and a high speed stage is set by engaging a brake [for example, the automatic transmission disclosed in Japanese Patent Application Laid-Open (Kokai) No. HEI 4-31226], the secondary shifting unit may be set at the high speed stage upon setting the rear range so that the change gear ratio for the rear range is rendered appropriate. In an automatic transmission of this type, setting of the secondary shifting unit in the high speed range in the state that the one-way clutch of the secondary shifting unit is engaged, in other words, setting of the rear range in the state that the vehicle is, for example, coasting forward causes the one-way clutch to engage so that the secondary shifting unit integrally rotating as a whole is fixed by the brake. The rotation of the output shaft in an advancing direction is therefore stopped.

Shifting to the second speed in the snow mode having the above-described hill-holding function or to the reverse range in which rotation of the output shaft in the advancing direction is stopped is performed by changing a selector lever from a neutral range to a drive range or a reverse range. When such a shifting operation is conducted, the vehicle may coast rearward or forward because no torque is transmitted to the output shaft at the neutral position. If shifting to the second speed having the hill-holding function is performed, for example, while the vehicle is moving down on an uphill, the friction engagement device is brought into engagement so that rotation of the output shaft in the downward direction is stopped abruptly. Because a load applied to a predetermined friction engagement device is high, a judder or a shift shock may take place so that the riding comfort may be impaired. In the case of the automatic transmission equipped with the above-described secondary shifting unit, the vehicle is coasting forward at the neutral position. When the automatic transmission is shifted to the reverse range in this state, rotation of the output shaft in the advancing direction is stopped abruptly so that a shift shock or a judder may also take place to impair the riding comfort in this case too.

US-A-4 984 485 relates to a method and an apparatus for controlling a vehicle automatic transmission which has a plurality of selectively established gear positions and is shifted to and temporarily held in a predetermined one of the gear positions other than the lowest-gear position, upon operation of a shift lever from its neutral position to one of drive positions, if a predetermined condition is satisfied within a preset time period after the shift lever operation.

US-A-4 346 626 relates to a control device for automatic transmissions with an overdrive mechanism which engages the brake of the overdrive mechanism while the shift control valve of the hydraulic control device is in the N-position (neutral), so that when the shift lever is shifted from the N-position the D-position or R-position, the overdrive mechanism is momentarily set for overdrive thereby reducing shocks upon manually shifting.

US-A-5 351 577 (& JP-A-5 157 167 published 22.6.93) relate to a control device for an automatic transmission wherein the auxiliary unit is set to a high speed when reverse is engaged before the main gearing is engaged.

With the foregoing in view, the present invention has as a primary object the provision of a shift control system which can prevent a shift shock or a judder even when shifting is performed, during coasting of a vehicle, to a speed stage at which rotation of an output shaft is stopped.

This object is attained with the features of the claims

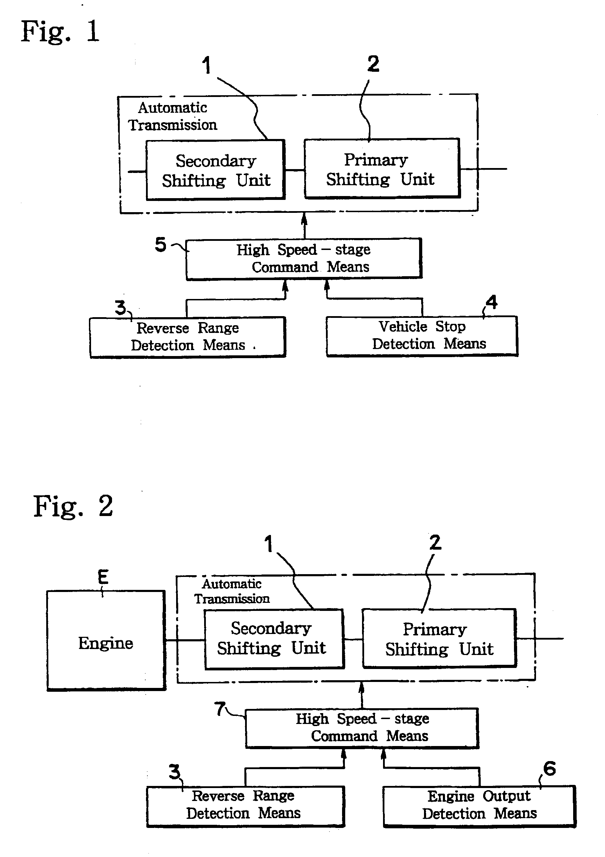

To achieve the above-described object, the present invention features the constructions depicted in the accompanying drawings. In one aspect of the present invention as recited in claim 1 (resp. Claim 5), there is thus provided, as illustrated in FIG. 1, a shift control system for an automatic transmission A in which a secondary shifting unit 1 capable of being shifted to a high speed stage or a low speed stage and a primary shifting unit 2 capable of setting one of plural speed stages including a reverse speed stage are connected in series and said secondary shifting unit 1 is set to the high speed stage upon setting the reverse speed stage, comprising:
reverse range detection means 3 for detecting a shift from a neutral range to a reverse range;
vehicle stop detection means 4 for detecting a vehicle in a stopped state; and
high speed stage command means 5 for setting said secondary shifting unit 1 at the high speed stage when subsequent to setting of said primary shifting unit 2 at the reverse speed stage as a result of a shift to the reverse range, said vehicle is determined by a signal from said vehicle stop detection means to have substantially stopped.

In another aspect of the present invention as recited in claim 5, there is also provided, as shown in FIG. 2, a shift control system for an automatic transmission A in which a secondary shifting unit 1 connected to an engine E and capable of being shifted to a high speed stage or a low speed stage and a primary shifting unit 2 capable of setting one of plural speed stages including a reverse speed stage are connected in series and said secondary shifting unit 1 can be set to the high speed stage upon setting the reverse speed stage, comprising:
reverse range detection means 3 for detecting a shift from a neutral range to a reverse range;
means 6 for detecting an output of said engine E; and
high speed stage command means 7 for setting said secondary shifting unit 1 at the high speed stage when subsequent to setting of said primary shifting unit 2 at the reverse speed stage as a result of a shift to the reverse range, an engine output detected by said engine output detection means 6 is at least equal to a predetermined output.

In the automatic transmission A to which the shift control system recited in each of claims 1 and 5 is applied, the reverse range is set by the primary shifting unit and a reverse speed stage is set by setting the secondary shifting unit 1 at the high speed stage. According to the shift control system of claim 1, shifting from the neutral range to the reverse range to set the reverse speed stage is detected by the reverse range detection means 3 and concurrently with the shifting, the primary shifting unit 2 is set in the reverse range. When the vehicle is determined to have stopped substantially by the signal from the vehicle stop detection means 4, the secondary shifting unit 1 is set at the high speed stage by the high speed stage command means 5. Prior to setting the reverse speed stage, the output shaft is therefore brought into such a state that its forward rotation is inhibited. In other words, the high speed stage of the secondary shifting unit 1 is set in such a state that the vehicle is substantially at a stop. Neither judder nor shock therefore occurs.

According to the shift control system of claim 5, shifting from the neutral range to the reverse range to set the reverse speed stage is detected by the reverse range detection means 3 and concurrently with the shifting, the primary shifting unit 2 is set in the reverse range. When an engine output detected by the engine output detection means 6 is equal to or greater than the predetermined value, the secondary shifting unit 1 is set at the high speed stage by the high speed stage command means 7. A torque which rotates the output shaft 8 in the reverse direction is therefore high, so that no judder occurs.

According to each shift control system of this invention, the speed stage to be set by shifting the automatic transmission from the neutral range to the predetermined range, said speed stage inhibiting rotation of the output shaft in the specified direction, is set under the condition that when the output shaft is rotating in the inhibited direction upon setting the speed stage, the vehicle is determined to have stopped substantially or the output of the engine is equal to or greater than the predetermined value. It is therefore possible to prevent judders or shocks and to maintain good riding comfort.
FIG. 1 is a simplified block diagram illustrating the shift control system of claim 1 by functional means;
FIG. 2 is a simplified block diagram illustrating the shift control system of claim 5 by functional means;

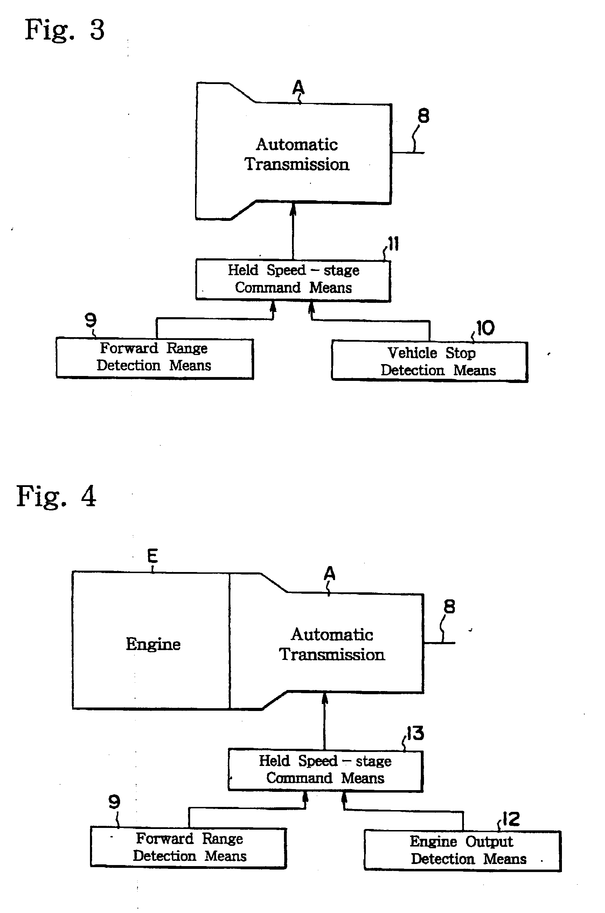

FIG. 3 is a simplified block diagram illustrating a further shift control system by functional means;
FIG. 4 is a simplified block diagram illustrating a further shift control system by functional means;
FIG. 5 is a block diagram showing a control system in a shift control system according to one embodiment of the present invention;
FIG. 6 is a skeleton diagram depicting a gear train of an automatic transmission to which the shift control system of FIG. 5 is applied;
FIG. 7 shows an engagement pattern of friction engagement devices which are selectively brought into engagement to set respective speed stages;
FIG. 8 illustrates a pattern of range positions which are selected by a selector lever;
FIG. 9 is a fragmentary hydraulic circuit showing a cut-off valve which controls the back pressure of an accumulator for a clutch in a secondary shifting unit;
FIG. 10 is a flow chart illustrating one example of a control routine to be executed upon shifting from a neutral range to a reverse range;
FIG. 11 is a flow chart showing another example of the control routine to be executed upon shifting from the neutral range to the reverse range;
FIG. 12 is a flow chart depicting one example of a control routine to be executed upon shifting from the neutral range to a drive range in a snow made; and
FIG. 13 is a flow chart illustrating another example of the control routine to be executed upon shifting from the neutral range to the drive range in the snow mode.

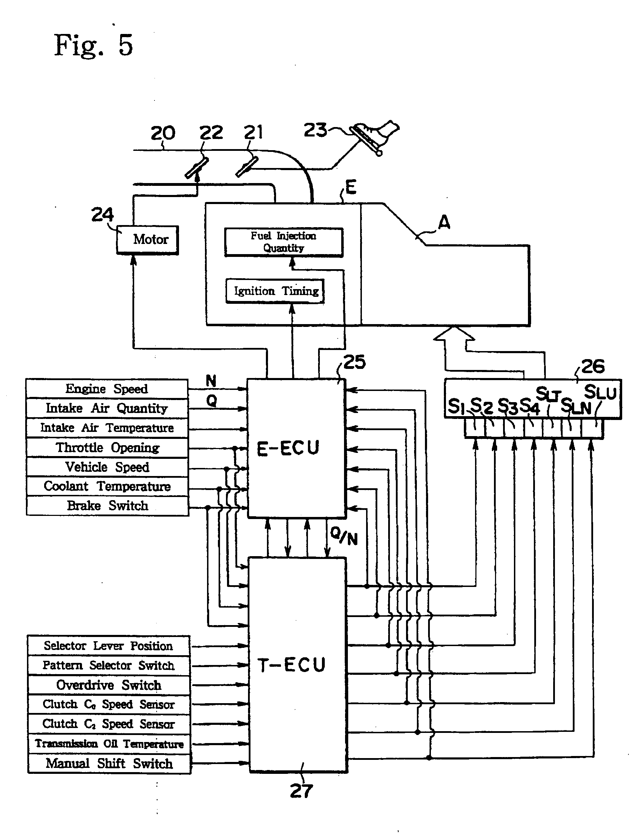

Referring next to the accompanying drawings, one embodiment of the present invention will be described. FIG. 5 is an overall control system diagram illustrating the one embodiment of the present invention. An engine E to which an automatic transmission A is connected has a main throttle valve 21 in an intake manifold 20 and also a subordinate throttle valve 22 located on an upstream side of the main throttle valve 21. The main throttle valve 21 is connected to an acpedal 23 and is opened or closed depending on the amount of a depression of the accelerator pedal 23. The subordinate throttle valve 22, on the other hand, is opened or closed by a motor 24. An electronic engine control unit (E-ECU) 25 is arranged to control the motor 24, namely, to adjust the position of the subordinate throttle valve 22 and also to control the amount of injected fuel, ignition timing and the like of the engine E. This electronic control unit is composed primarily of a central processing unit (CPU), memories (RAM,ROM) and an input/output interface. Inputted to the electronic control unit 25 are various signals as data for control, such as signals from an engine speed sensor, an intake air quantity sensor, an intake air temperature sensor, a throttle opening sensor, a vehicle speed sensor, an engine coolant temperature sensor and a brake switch.

The gear position, lockup clutch and line pressure of the automatic transmission A is controlled by a hydraulic pressure control unit 26. The hydraulic pressure control unit 26 is designed to be controlled electrically, and to perform shifting, is provided with first to third shift solenoid valves S₁-S₃, a fourth solenoid valve S₄ for controlling the state of each engine brake, a linear solenoid valve S_{LT} for controlling in; the line pressure, a linear solenoid valve S_{LN} for controlling the back pressure of an accumulator, and a linear solenoid valve S_{LU} for controlling a lockup clutch.

An electronic automatic transmission control unit (T-ECU) 27 is also arranged to output signals to these solenoid valves so that shifting, the line pressure, the accumulator back pressure and the like are controlled. This electronic automatic transmission control unit 27 is composed primarily of a central processing unit (CPU), memories (RAM,ROM) and an input/output interface. Inputted as data for control to the electronic control unit 27 are signals from the throttle opening sensor, the vehicle speed sensor, the engine coolant temperature sensor and the brake switch, signals from a selector lever position sensor and a pattern select switch, a signal from an overdrive switch, a signal from a C₀ sensor for detecting a revolution speed of a clutch C₀ to be described subsequently, a signal from a C₂ sensor for detecting a revolution speed of a second clutch C₂, signals from a transmission oil temperature sensor and a manual shift switch, etc. The electronic automatic transmission control unit 27 and the electronic engine control unit 25 are connected together to permit data communication therebetween. From the electronic engine control unit 25, signals such as a signal indicating an intake air quantity per revolution (Q/N) are transmitted to the electronic automatic transmission control unit 27. From the electronic automatic transmission control unit 27, on the other hand, signals equivalent to command signals to the respective solenoid valves and signals commanding a speed stage, and the like are transmitted to the electronic engine control unit 25.

The electronic automatic transmission control unit 27 determines a speed stage, the ON/OFF state of the lockup clutch, the regulated level of the line pressure, etc. on the basis of inputted data and based on the results of the determination, output command signals to the corresponding solenoid valves. It also performs determination of a failure and based on the determination, control of the failure. The electronic engine control unit 25, on the other hand, controls the amount of fuel to be injected, the ignition timing, the position of the subordinate throttle valve 22 and the like on the basis of inputted data and upon shifting the automatic transmission A, also reduces the amount of fuel to be injected, changes the ignition timing or changing the position of the subordinate throttle valve 22 to a smaller opening to temporarily reduce the output torque.

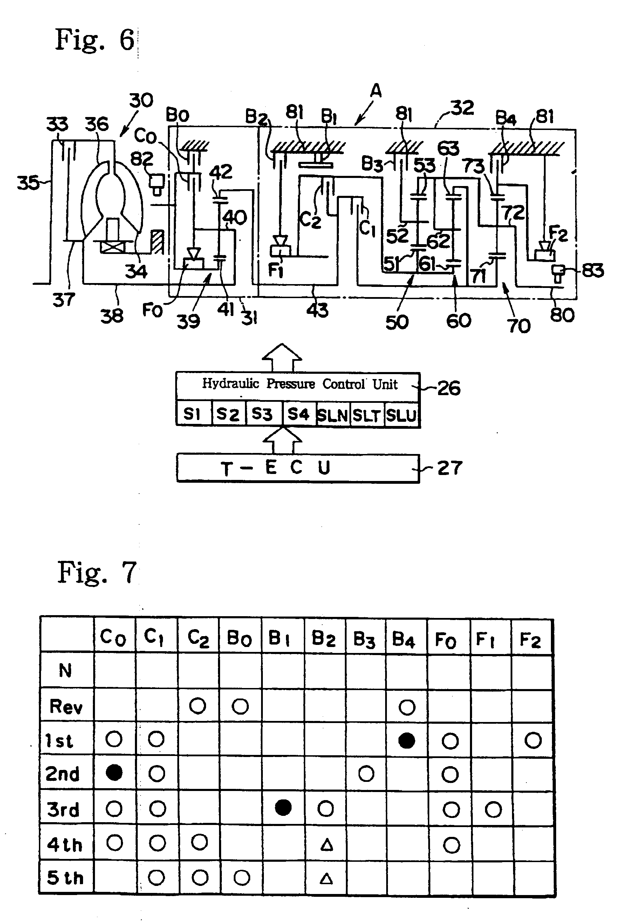

FIG. 6 illustrates one example of gear trains of the automatic transmission A. The gear train is designed to set 5-forward/1-reverse speed stages. Described specifically, the automatic transmission A shown in FIG. 6 is provided with a torque converter 30, a secondary shifting unit 31 and a primary shifting unit 32. The torque converter 30 has a lockup clutch 33, which is disposed between a front cover 35 integrated with a pump impeller 34 and a member (hub) 37 integrally mounted with turbine runners 36. A crankshaft (not shown) of an engine crankshaft (not shown) is connected to the front cover 35. An input shaft 38 to which the turbine runners 36 are connected is connected to a carrier 40 of an overdrive planetary gear mechanism 39 which also constructs the secondary shifting unit 31.

Between the carrier 40 and a sun gear 41 in the planetary gear mechanism 49, a multi-plate clutch C₀ and a one-way clutch F₀ are arranged. Incidentally, this one-way clutch F₀ is designed to engage when the sun gear 41 undergoes normal rotation relative to the carrier 40 (i.e., rotation in the direction of rotation of the input shaft 38). Also provided is a multi-plate brake B₀ for selectively stopping rotation of the sun gear 41. A ring gear 42 as an output element of the secondary shifting unit 31 is connected to an intermediate shaft 43 as an input element of the primary shifting unit 32.

Where the multi-plate clutch C₀ or the one-way clutch F₀ is in an engaged state, the planetary gear mechanism 39 integrally rotates as a whole. The intermediate shaft 43 therefore rotates at the same speed as the input shaft 38, whereby the secondary shifting unit 31 is set at a low speed stage. Where the brake B₀ is engaged and rotation of the sun gear 41 is hence stopped, on the other hand, the ring gear 42 is rotated at a higher speed in a normal direction relative to the input shaft 38 so that a high speed stage is established.

The primary shifting unit 32, on the other hand, is provided with three sets of planetary gear mechanisms 50,60,70. Their rotating elements are connected as will be described hereinafter. Namely, a sun gear 51 of the first planetary gear mechanism 50 and a sun gear 61 of the second planetary gear mechanism 60 are integrally connected to each other. Further, three elements, that is, a ring gear 53 of the first planetary gear mechanism 50, a carrier 62 of the second planetary gear mechanism 60 and a carrier 72 of the third planetary gear mechanism 70 are connected together. Connected to the carrier 72 is an output shaft 80. In addition, a ring gear 63 of the second planetary gear mechanism 60 is connected to a sun gear 71 of the third planetary gear mechanism 70.

The gear train of the main shifting unit 32 permits setting of one reverse speed stage and four forward speed stages. To this end, clutches and brakes are arranged as will be described hereinafter. Describing the clutches first, a first clutch C₁ is arranged between the ring gear 63 of the second planetary gear mechanism 60 and the sun gear 71 of the third planetary gear mechanism 70, said ring gear 63 and said sun gear 71 being connected together, and the intermediate shaft 43, and a second clutch C₂ is disposed between the sun gear 51 of the first planetary gear mechanism 50 and the sun gear 61 of the second planetary gear mechanism 60, said sun gear 51 and said sun gear 61 being connected together, and the intermediate shaft 43.

A description will next be made of the brakes. A first brake B₁ is a band brake and is arranged to stop rotation of the sun gears 51,61 of the first and second planetary gear mechanism 50,60. Between these sun gears 51,61 (namely, a common sun gear shaft) and a casing 81, a first one-way clutch F₁ and a second brake B₂ in the form of a multi-plate brake are arranged in series. The first one-way clutch F₁ is designed to engage when the sun gears 41,51 attempt reverse rotation (i.e., rotation in a direction opposite to the direction of rotation of the input shaft 38). A third brake B₃ in the form of a multi-plate brake is disposed between a carrier 52 of the first planetary gear mechanism 50 and the casing 81. As a brake for stopping rotation of a ring gear 73 of the third planetary gear mechanism 70, a fourth brake B₄ in the form of a multiplate brake and a second one-way clutch F₂ are arranged in parallel between the carrier 72 and the casing 81. This second one-way clutch F₂ is designed to engage when the ring gear 73 attempts reverse rotation.

Of the above-described rotating members in the respective shifting units 31,32, the clutch C₀ of the secondary shifting unit 31 is provided with a C₀ sensor 82 for detecting its revolution speed and the output shaft 80 is provided with a vehicle speed sensor 83 for detecting its revolution speed.

According to the above-described automatic transmission A, the 5-forward/1-reverse speed stages can be set by engaging or releasing the corresponding clutches and brakes as shown in the gear shift pattern of FIG. 7, in which mark ○ indicates "engaged", mark ● "engaged upon application of an engine brake", mark △ either "engaged" or "released", and blank "released". As is appreciated from FIGS. 6 and 7, the above-described automatic transmission A can exhibit at speed stages of the second speed and higher the hill-holding function that when a vehicle is at a stop on an uphill, the vehicle is inhibited from moving rearward, in other words, the output shaft 80 is inhibited from reverse rotation.

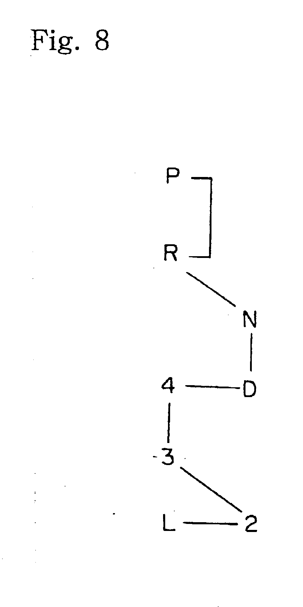

In the above-described automatic transmission A, one of plural ranges including the reverse range for setting a reverse speed stage is selected by a selector lever (not illustrated). The positions of these ranges are arranged as shown in FIG. 8. These range positions are connected together by a guide groove for the selector lever.

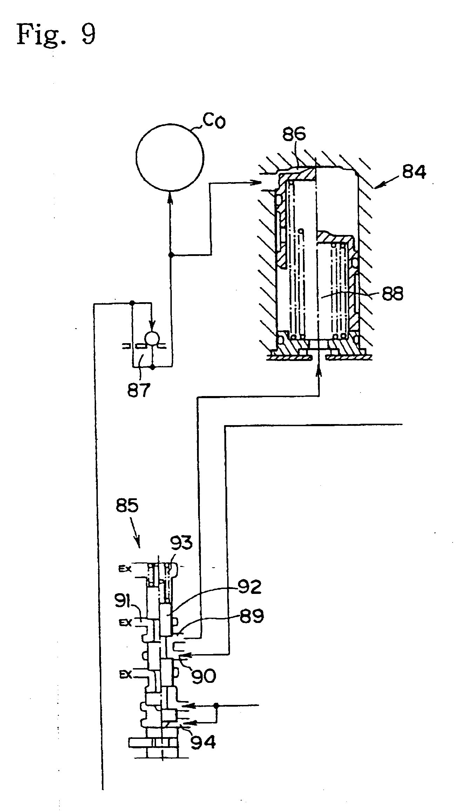

Of the friction engagement devices shown in FIG. 6, the clutch C₀ and the brake B₀ in the secondary shifting unit 31 and the second clutch C₂ in the primary shifting unit 32 are each provided with an accumulator which can control the back pressure of the associated friction engagement device. A cut-off valve (back pressure control valve) 85 is connected to a back pressure compartment of an accumulator 84 for the clutch C₀ out of such accumulators. FIG. 9 illustrates the construction of the cut-off valve . A positive pressure compartment 86 of the accumulator 84 is connected to a line which extends between a hydraulic servomotor C-0 for the clutch C₀ and an orifice 87 equipped with a check ball. Further, a back pressure compartment 88 of the accumulator 84 is connected to an output port 89 of the cut-off valve 85.

The cut-off valve 85 makes its output port 89 selectively communicate to an input port 90 or a drain port 91, and a control port 94 to which a throttle pressure is fed is formed on a side opposite to a spring 93 with a spool 92 interposed therebetween. By feeding a throttle pressure to the control port 94, the spool 92 is lifted upward as viewed in FIG. 9 so that the output port 89 is communicated to the drain port 91. Where no throttle pressure is applied to the control port 94, conversely, the spool 92 moves to a lower side as viewed in FIG. 9 so that the output port 89 is communicated to the input port 90.

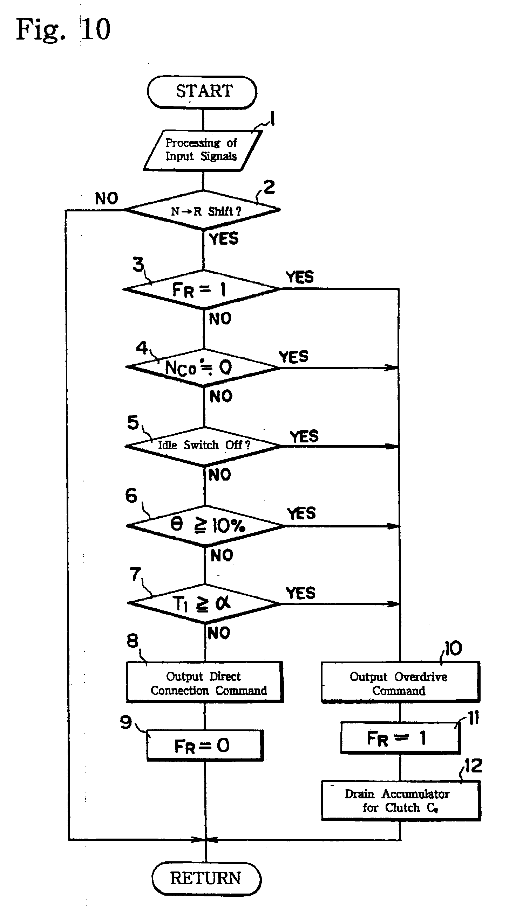

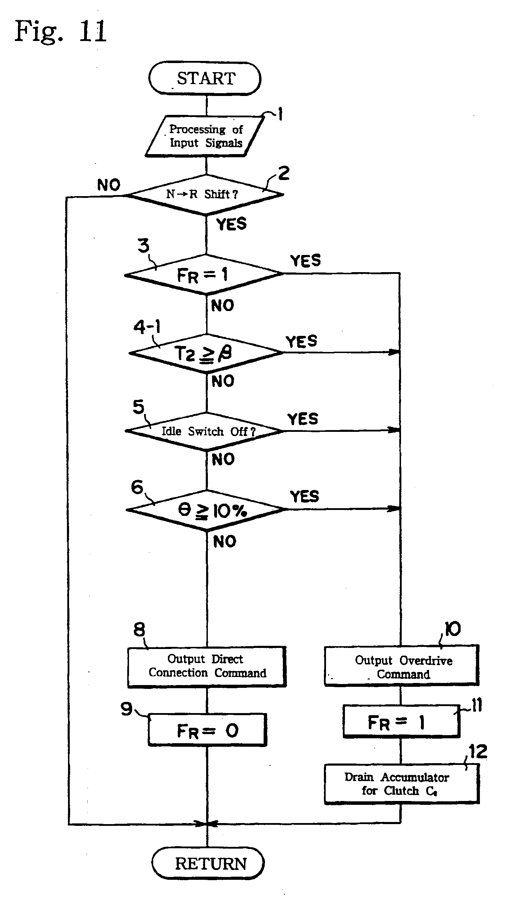

Upon setting a reverse speed range in the above-described automatic transmission A, the secondary shifting unit 31 is brought into an overdrive state to provide an appropriate gear ratio. The secondary shifting unit 31 however integrally rotates as a whole under the condition that the one-way clutch F₀ is engaged. Engagement of the brake B₀ in this state would result in stopping of the rotation of the secondary shifting unit 31 which is rotating as an integral unit, so that a judder may take place. The secondary shifting unit 31 is therefore controlled as shown in FIG. 10 or FIG. 11 when the automatic transmission is changed over from the neutral range to the reverse range.

In FIG. 10, it is determined, subsequent to processing of input signals (step 1), whether or not a changing operation from the neutral range to the reverse range has been conducted (step 2). If this operation has not been conducted yet, the routine returns. If the changing operation has already been conducted, it is next determined whether or not flag FR has been set at "1" (step 3). Setting of flag FR at "1" indicates that the secondary shifting unit 31 has been set at the overdrive stage. If flag FR is not "1", in other words, if the result of the determination is "NO", it is then determined whether or not the input revolution speed, in other words, the revolution speed N_{CO} of the clutch C₀ is lower than a predetermined value (for example, approximately "0") (step 4). This determination step is to determine whether or not a vehicle has stopped substantially. If the result of the determination is "NO", in other words, the vehicle has not stopped substantially, it is next determined whether or not an idle switch is off (step 5).

This determination step is to determine whether or not an output is produced from the engine E. If the result of the determination is "NO", in other words, if an accelerator pedal has not been depressed and the engine E is in an idling state, it is next determined whether or not the throttle opening θ is equal to or greater than a predetermined opening (for example 10%) (step 6). This determination step is also to determine whether or not an engine output is produced to a certain extent. Accordingly, this determination step serves as a backup when the idle switch is in fault.

If the determination result of step 6 is "NO", it is then determined whether or not the counted time of a timer T₁ has become a predetermined time α or longer (step 7). Although the behavior of the vehicle can be determined in step 4, no data can be obtained if the corresponding sensor should fail. Step 7 is provided as a backup for the occurrence of such a fault. Upon counting-up of the predetermined time a by the timer T₁. a determination is made on the control of changing of the secondary shifting unit 31. In other words, the timer T₁ functions as a so-called guard timer.

If the time counted by the timer T₁ has not reached the predetermined time α, namely, if the result of the determination in step 7 is "NO", a command signal is outputted to bring the secondary shifting unit 31 into a directly connected state (step 8) and at the same time, flag FR is set at "0", and the routine then returns.

Even if the primary shifting unit 32 is changed over into a reverse state as a result of shifting to the reverse range, the secondary shifting unit 31 is set at the low speed stage, that is, in the directly connected state to permit forward rotation of the output shaft 80 provided that the input revolution speed N_{C0} is higher than a predetermined value for reasons such that the vehicle is still coasting forward. This applies equally when no engine output is produced. As a result, it is possible to avoid such a situation that the output shaft 80 is forced to stop. Neither judder nor shock therefore occurs.

On the other hand, if flag FR has been set at "1" and the determination in step 3 has resulted in "YES", if the determination in step 4 has resulted in "YES" as the input revolution speed N_{C0} is approximately "0", if the determination in step 5 has resulted in "YES" as the idle switch is off, if the determination in step 6 has resulted in "YES" as the throttle opening θ is 10% or greater, or if the counted time of the timer T₁ has reached the predetermined time α or longer and the determination in step 7 has resulted in "YES", a command signal is outputted to change the secondary shifting unit 31 over into the overdrive state (step 10). Further, flag FR is set at "1" (step 11), and inactivation of the accumulator 84 of the clutch C₀, in other words, communication of its back pressure compartment 88 to the drain port is performed by the cut-off valve 85 (step 12).

Namely, the overdrive state of the secondary shifting unit 31 is set by engaging the brake B₀ to fix its sun gear 41. Even if the clutch C₀ of the secondary shifting unit 31 is brought into engagement, for example, while the vehicle is still coasting forward, the fixing of the sun gear 41 by the brake B₀ does not cause a judder due to sliding of the fourth brake B₄ kept in engagement to set a reverse speed stage or does not develop a shock as large as impairing the riding comfort because the input revolution speed N_{C0} is as low as practically "0". Even if the input revolution speed N_{C0} is not practically "0", a reverse speed stage can still be set without causing a judder or shock insofar as an engine output of at least a certain degree is produced, because a large torque is transmitted from the engine E to the sun gears 51,61 of the first and second planetary gear mechanisms 50,60 in the primary shifting unit 32 and the revolution speeds of these sun gears 51,61 are hence raised.

To set the secondary shifting unit at the overdrive stage, it is necessary to release the clutch C₀ and at the same time to engage the brake B₀. Since the back pressure compartment 88 of the accumulator 84 connected to the clutch C₀ is communicated to the drain port by the cut-off valve 85, no oil flows into the back pressure compartment 88 even if the piston of the accumulator 84 returns by the spring. No reduction therefore occurs in the line pressure, thereby making it possible to maintain the engagement pressure of the fourth brake B₄ which is in engagement to set a reverse speed stage. As a result, it is possible to effective prevent a judder.

Upon changing over from the neutral range to the reverse range, the primary shifting unit 31 is first set in the reverse position. Even if the vehicle is coasting forward, for example, the state of the vehicle eventually changes from a stopped state to a rearwardly-moving state. In the example shown in FIG. 10, the secondary shifting unit 31 is changed over into the overdrive state after waiting until the input revolution speed N_{C0} drops substantially to "0" subsequent to the change-over to the reverse range. As the input revolution speed N_{C0} drops substantially to "0" as time goes on, it is possible to control the change-over of the secondary shifting unit 31 to the overdrive stage on the basis of the elapsed time without relying upon the input revolution speed N_{C0}.

One example of such control is illustrated in FIG. 11. In the illustrated example, it is determined, instead of determination of an input revolution speed N_{C0}, whether or not the counted value of a timer T₂ has reached a predetermined time β (<α) or longer (step 4-1). The above-described backup by the timer T₁ in step 7 is not conducted here. Although this predetermined time β may be a fixed value, it may be a value which depending on the vehicle speed, the engine speed, the oil temperature or the on/off state of the brake switch, varies to make a shock smaller. The control illustrated by way of example in FIG. 11 can also prevent a judder or a shock for reasons similar to the illustrative control depicted in FIG. 10.

The above-described examples are examples of control in which a reverse speed stage at which reverse rotation of the output shaft 80 is inhibited, in other words, a reverse speed stage at which the secondary shifting unit 31 is set at the overdrive stage is set while the vehicle is moving forward under inertia or the like. Similar control can be performed upon setting a speed stage with the so-called hill-holding function.

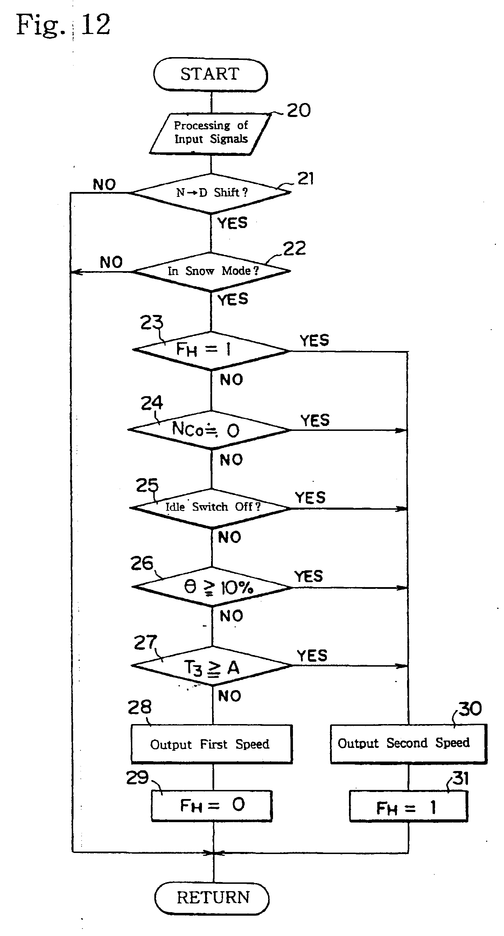

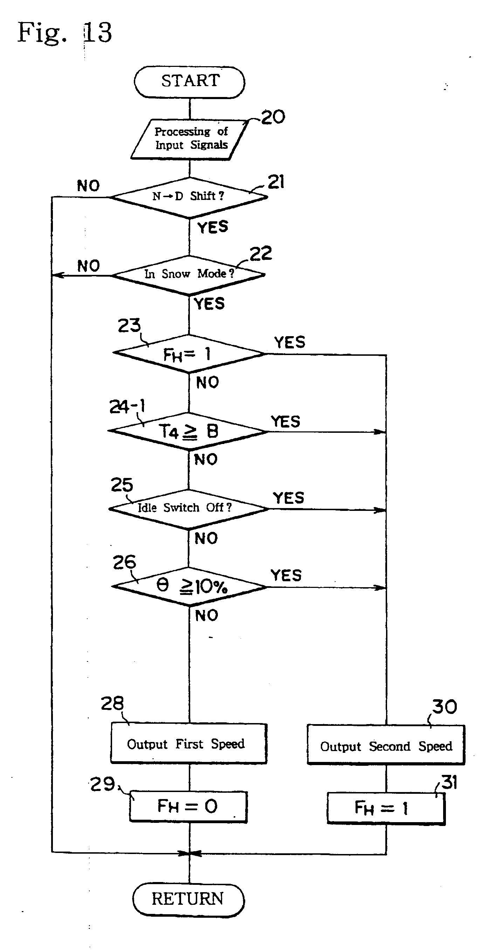

When starting on a snow-covered road whose surface has a small coefficient of friction (µ), a snow mode may be set to start at the second speed with a view toward avoiding a slip. The above-described automatic transmission A has the hill-holding function at a speed stage of the second speed or higher. At the second speed, for example, the third brake B₃ is engaged so that the output shaft 80 is inhibited from reverse rotation. If the vehicle is moving rearward on an uphill when the selector lever has been changed from the neutral range to the drive range, reverse rotation of the output shaft 80 is abruptly prevented so that a judder or a shock may occur. To eliminate such an inconvenience, the automatic transmission is controlled as illustrated in FIG. 12 or FIG. 13.

Reference is now made to FIG. 12. Subsequent to processing of input signals (step 20), it is determined whether or not the change-over from the neutral range to the drive range (N→D) has been conducted (step 21). If this change-over has not been conducted, the routine returns. If it has been conducted conversely, it is determined whether or not the snow mode has been selected (step 22). If not in the snow mode, the routine returns. If the snow mode has been selected, it is then determined whether or not flag FH has been set at "1" (step 23). Setting of flag FH at "1" indicates that the second speed has been set in the snow mode. If flag FH is found to have been set at "1" in step 23, it is then determined whether or not the input revolution speed, namely, the revolution speed N_{C0} of the clutch C₀ is equal to or lower than a predetermined value (for example, approximately "0") (step 24). This determination step is to determine whether or not a vehicle has stopped substantially. If the result of the determination is "NO", in other words, the vehicle has not stopped substantially, it is next determined whether or not the idle switch is off (step 25).

This determination step is to determine whether or not an output is produced from the engine E. If the result of the determination is "NO", in other words, if the accelerator pedal has not been depressed and the engine E is in an idling state, it is next determined whether or not the throttle opening θ is equal to or greater than a predetermined opening (for example 10%) (step 26). This determination step is also to determine whether or not an engine output is produced to a certain extent. Accordingly, this determination step serves as a backup when the idle switch is in fault.

If the determination result of step 26 is "NO", it is then determined whether or not the counted time of a timer T₃ has become a predetermined time A or longer (step 27). Although the behavior of the vehicle can be determined in step 24, no data can be obtained if the corresponding sensor should fail. Step 27 is provided as a backup for the occurrence of such a fault. Upon counting-up of the predetermined time A by the timer T₃. a determination is made as to the shifting to the second speed. In other words, the timer T₃ functions as a so-called guard timer.

If the time counted by the timer T₃ has not reached the predetermined time A, namely, if the result of the determination in step 27 is "NO", a shift command signal is outputted to set the first speed even the time of a start-up in the snow mode and at the same time, flag FH is set at "0", and the routine then returns.

Even in the snow mode in which the speed stage at the time of a start-up is set at the second speed, the automatic transmission is set at the first speed without any hill-holding function to permit reverse rotation of the output shaft 80 provided that the input revolution speed N_{C0} is higher than a predetermined value for reasons such that the vehicle is moving rearward. This applies equally when no engine output is produced. As a result, it is possible to avoid such a situation that the output shaft 80 is forced to stop. Neither judder nor shock therefore occurs.

On the other hand, if flag FR has been set at "1" and the determination in step 22 has resulted in "YES", if the determination in step 24 has resulted in "YES" as the input revolution speed N_{C0} is approximately "0", if the determination in step 25 has resulted in "YES" as the idle switch is off, if the determination in step 26 has resulted in "YES" as the throttle opening θ is 10% or greater, or if the counted time of the timer T₃ has reached the predetermined time A or longer and the determination in step 27 has resulted in "YES", a command signal is outputted to set the second speed with the hill-holding function (step 30) and at the same time, flag FH is set at "1" (step 31).

Namely, the second speed in the snow mode has the hill-holding function which inhibits reverse rotation of the output shaft 80. Upon setting this second speed in association with change-over from the neutral range to the drive range, no excess load is applied to the corresponding friction engagement devices even if the vehicle is moving rearward on an uphill, because the input revolution speed N_{C0} is as low as approximately "0". Neither a judder not a shock of such an extent as impairing the riding comfort therefore occurs. Even if the input revolution speed N_{C0} is not practically "0" it is still possible to avoid a judder or a shock because the torque for making the vehicle run forward becomes larger insofar as an engine output of at least a certain degree is produced.

When the selector lever is changed over from the neutral range to the drive range in the snow mode, the automatic transmission is set at the first speed according to the above control unless the condition for setting the second speed having the hill-holding function is met. If the vehicle is moving rearward on an uphill in the above case, the setting of the first speed causes the vehicle to gradually stop or the accelerator pedal is depressed to stop the vehicle. Accordingly, the condition for setting the second speed will be met as time goes on. As a condition for setting the second speed in the snow mode, it is therefore possible to employ the elapse of a predetermined time in place of the above-described condition that the input revolution speed N_{C0} is substantially "0".

One example of such control is illustrated in FIG. 13. In the illustrated example, it is determined, instead of determining the input revolution speed N_{C0}, whether or not the counted value of a timer T₄ has reached a predetermined time B (<A) or longer (step 24-1). The above-described backup by the timer T₃ in step 27 is not conducted here. Although this predetermined time B may be a fixed value, it may be a value which depending on the vehicle speed, the engine speed, the oil temperature or the on/off state of the brake switch, varies to make a shock smaller. The control illustrated by way of example in FIG. 13 can also prevent a judder or a shock for reasons similar to the illustrative control depicted in FIG. 12.

It should be borne in mind that the present invention is not limited to the embodiment described above. For example, the present invention can be practiced on an automatic transmission equipped with a control system and a gear train other than the control system shown in FIG. 5 and the gear train depicted in FIG. 6.

## Claims

1. A shift control system for an automatic transmission in which a secondary shifting unit (1,31) capable of being shifted to a high speed stage or a low speed stage and a primary shifting unit (2,32) capable of setting one of plural speed stages including a reverse speed stage are connected in series and said secondary shifting unit (1) is set to the high speed stage upon setting the reverse speed stage, comprising:
reverse range detection means (3) for detecting a shift from a neutral range to a reverse range;
vehicle stop detection means (4)for detecting a vehicle in a stopped state;
high speed stage command means (5) for setting said secondary shifting unit (1) at the high speed stage when, subsequent to setting of said primary shifting unit (2) in the reverse speed stage as a result of a shift to the reverse range, said vehicle is determined by a signal from said vehicle stop detection means to have substantially stopped; and said high speed stage command means waits for setting said secondary shifting unit at the high speed stage until the vehicle has substantially stopped.

2. A shift control system according to claim 1, wherein said vehicle stop detection means is means for detecting an input revolution speed to said automatic transmission; and when an input revolution speed detected by said input revolution speed detection means is not higher than a predetermined revolution speed, said high speed stage command means determines that said vehicle has stopped substantially and, sets said secondary shifting unit at the high speed stage.

3. A shift control system according to claim 1 or 2, wherein said shift control system is additionally provided with timer means (T₁, T2) for counting a time from detection of a shift to the reverse range by said reverse range detection means; and when a count value by said timer means is at least equal to a predetermined time (α,β) or when said vehicle is determined by a signal from said vehicle stop detection means to have stopped substantially, said high speed stage command means sets said secondary shifting unit at the high speed stage.

4. A system according to claim 1, 2 or 3, wherein said secondary shifting unit (31) has a multi-plate clutch (C₀) released at the high speed stage, and said multi-plate clutch is controlled in engagement characteristics by a hydraulic servomotor (C-0), which controls to engage or release the multi-plate clutch in accordance with feeding or draining of a hydraulic pressure, and an accumulator (84) for controlling hydraulic pressure feeding and draining characteristics for said servomotor; and said accumulator has a positive pressure compartment (86) and a back pressure compartment (88), said positive pressure compartment is communicated to said hydraulic servomotor whereas said back pressure compartment is communicated to a back pressure control valve (85) for controlling the hydraulic pressure in said back pressure compartment, and said back pressure control valve communicates said back pressure compartment to a drain line upon releasing said multi-plate clutch.

5. A shift control system for an automatic transmission in which a secondary shifting unit (1,37) connected to an engine (E) and capable of being shifted to a high speed stage or a low speed stage and a primary shifting unit (2,32) capable of setting one of plural speed stages including a reverse speed stage are connected in series and said secondary shifting unit is set to the high speed stage upon setting the reverse speed stage, comprising:
reverse range detection means (3) for detecting a shift from a neutral range to a reverse range;
means (6) for detecting an output of said engine (E); and
high speed stage command means (7) for setting said secondary shifting unit (1) at the high speed stage when subsequent to setting of said primary shifting unit (2) at the reverse speed stage as a result of a shift to the reverse range, an engine output detected by said engine output detection means (6) is at least equal to a predetermined output.

6. A shift control system according to claim 5, wherein said engine output detection means is means for detecting a throttle opening; and when the throttle opening (θ) detected by said throttle opening detection means is at least equal to a predetermined value, said high speed stage command means sets said secondary shifting unit at the high speed stage.

7. A shift control system according to claim 5 or 6, wherein said shift control system is additionally provided with timer means (T₁,T₂) for counting a time from detection of a shift to the reverse range by said reverse range detection means; and when a count value by said timer means is at least equal to a predetermined time (α,β) or when an engine output detected by said engine output detection means is at least equal to a predetermined output, said high speed stage command means sets said secondary shifting unit at the high speed stage.

8. A system according to claim 5, 6 or 7, wherein said secondary shifting unit (31) has a multi-plate clutch (C₀)released at the high speed stage, and said multi-plate clutch is controlled in engagement characteristics by a hydraulic servomotor (C-O), which controls to engage or release the multi-plate clutch in accordance with feeding or draining of a hydraulic pressure, and an accumulator (84) for controlling hydraulic pressure feeding and draining characteristics for said servomotor; and said accumulator has a positive pressure compartment (86) and a back pressure compartment (88), said positive pressure compartment is communicated to said hydraulic servomotor whereas said back pressure compartment is communicated to a back pressure control valve (85) for controlling the hydraulic pressure in said back pressure compartment, and said back pressure control valve communicates said back pressure compartment to a drain line upon releasing said multi-plate clutch.

## Patentansprüche

1. Schaltsteuerungssystem für ein Automatikgetriebe, in dem eine sekundäre Schalteinheit (1, 31), die auf eine hohe Gangstufe oder auf eine niedrige Gangstufe schaltbar ist, und eine primäre Schalteinheit (2, 32), die eine von mehreren Gangstufen einstellen kann, einschließlich eines Rückwärtsbereichs, in Serie geschaltet sind, und wobei die sekundäre Schalteinheit (1) auf eine hohe Gangstufe eingestellt wird, wenn die Rückwärtsgangstufe eingestellt wird, mit:
einer Rückwärtsbereicherfassungseinrichtung (3) zum Erfassen eines Schaltvorgangs von einem neutralen Bereich auf einen Rückwärtsbereich;
einer Fahrzeug-Haltezustanderfassungseinrichtung (4) zum Erfassen eines Haltezustands eines Fahrzeugs; und
einer Einrichtung (5) zum Anweisen einer hohen Gangstufe zum Einstellen der sekundären Schalteinheit (1) auf die hohe Gangstufe, wenn, nachdem die primäre Schalteinheit (2) als Ergebnis eines Schaltvorgangs in den Rückwärtsbereich auf die Rückwärtsgangstufe eingestellt wurde, gemäß einem Signal von der Fahrzeug-Haltezustanderfassungseinrichtung festgestellt wurde, daß das Fahrzeug im wesentlichen gestoppt hat; und
wobei die Einrichtung zum Anweisen einer hohen Gangstufe wartet, um die sekundäre Schalteinheit auf die hohe Gangstufe einzustellen, bis das Fahrzeug im wesentlichen gestoppt hat.

2. System nach Anspruch 1, wobei die Fahrzeug-Haltezustanderfassungseinrichtung eine Einrichtung zum Erfassen einer Eingangsdrehzahl zum Automatikgetriebe ist, und wobei, wenn eine durch die Eingangsdrehzahlerfassungseinrichtung erfaßte Eingangsdrehzahl nicht höher ist als ein vorgegebener Drehzahlwert, die Einrichtung zum Anweisen einer hohen Gangstufe bestimmt, daß das Fahrzeug im wesentlichen gestoppt hat, und die sekundäre Schalteinheit auf eine hohe Gangstufe einstellt.

3. System nach Anspruch 1 oder 2, wobei das Schaltsteuerungssystem außerdem einen Zeitzähler (T₁, T₂) zum Zählen einer Zeit von der Erfassung eines Schaltvorgangs auf den Rückwärtsbereich durch die Rückwärtsbereicherfassungseinrichtung aufweist, wobei, wenn ein Zählwert des Zeitzählers einem vorgegebenen Zeitwert (α, β) mindestens gleicht, oder wenn gemäß einem Signal von der Fahrzeug-Haltezustanderfassungseinrichtung festgestellt wird, daß das Fahrzeug im wesentlichen gestoppt hat, die Einrichtung zum Anweisen einer hohen Gangstufe die sekundäre Schalteinheit auf die hohe Gangstufe einstellt.

4. System nach Anspruch 1, 2 oder 3, wobei die sekundäre Schalteinheit (31) aufweist: eine Mehrscheibenkupplung (C₀), die in der hohen Gangstufe ausgerückt ist, wobei der Eingriffszustand der Mehrscheibenkupplung durch einen Hydraulik-Servomotor (C-0) gesteuert wird, dessen Steuerung so ausgeführt wird, daß die Mehrscheibenkupplung gemäß der Zufuhr oder der Ableitung eines Hydraulikdrucks ein- oder ausgerückt wird, und einen Druckspeicher (84) zum Steuern der Hydraulikdruckzufuhr- und -ableitung für den Servomotor, wobei der Druckspeicher eine Überdruckkammer (86) und eine Rückdruckkammer (88) aufweist, wobei die Überdruckkammer mit dem Hydraulik-Servomotor kommuniziert, wohingegen die Rückdruckkammer mit einem Rückdruckregelventil (85) zum Steuern des Hydraulikdrucks in der Rückdruckkammer kommuniziert, und wobei die Rückdruckkammer über das Rückdruckregelventil mit einer Ableitleitung kommuniziert, wenn die Mehrscheibenkupplung ausgerückt wird.

5. Schaltsteuerungssystem für ein Automatikgetriebe, wobei eine mit einem Motor (E) verbundene sekundäre Schalteinheit (1, 31), die auf eine hohe Gangstufe oder auf eine niedrige Gangstufe schaltbar ist, und eine primäre Schalteinheit (2, 32), die eine von mehreren Gangstufen, einschließlich einer Rückwärtsgangstufe, einstellen kann, in Serie geschaltet sind, und wobei die sekundäre Schalteinheit auf die hohe Gangstufe eingestellt wird, wenn die Rückwärtsgangstufe eingestellt wird, mit:
einer Rückwärtsbereicherfassungseinrichtung (3) zum Erfassen eines Schaltvorgangs von einem neutralen Bereich in einen Rückwärtsbereich;
einer Einrichtung (6) zum Erfassen einer Leistung des Motors (E); und
einer Einrichtung (7) zum Anweisen einer hohen Gangstufe zum Einstellen der sekundären Schalteinheit (1) auf die hohe Gangstufe, wenn, nachdem die primäre Schalteinheit (2) als Ergebnis eines Schaltvorgangs in den Rückwärtsbereich auf die Rückwärtsgangstufe eingestellt wurde, eine durch die Motorleistungserfassungseinrichtung (6) erfaßte Motorleistung einem vorgegebenen Leistungswert mindestens gleich ist.

6. System nach Anspruch 5, wobei die Motorleistungserfassungseinrichtung eine Einrichtung zum Erfassen eines Drosselklappenöffnungsgrades ist, wobei, wenn der durch die Drosselklappenöffnungsgraderfassungseinrichtung erfaßte Dresselklappenöffnungsgrad (v) einem vorgegebenen Wert mindestens gleicht, die Einrichtung zum Anweisen einer hohen Gangstufe die sekundäre Schalteinheit auf die hohe Gangstufe einstellt.

7. System nach Anspruch 5 oder 6, wobei das Schaltsteuerungssystem außerdem einen Zeitzähler (T₁, T₂) zum Zählen einer Zeit von der Erfassung eines Schaltvorgangs in den Rückwärtsbereich durch die Rückwärtsbereicherfassungseinrichtung aufweist, wobei, wenn ein Zählwert des Zeitzählers einem vorgegebenen Zeitwert (α, β) mindestens gleicht, oder wenn eine durch die Motorleistungserfassungseinrichtung erfaßte Motorleistung einem vorgegebenen Leistungswert mindestens gleicht, die Einrichtung zum Anweisen einer hohen Schaltstufe die sekundäre Schalteinheit auf die hohe Gangstufe einstellt.

8. System nach Anspruch 5, 6 oder 7, wobei die sekundäre Schalteinheit (31) aufweist: eine Mehrscheibenkupplung (C₀), die in der hohen Gangstufe ausgerückt ist, und wobei der Eingriffszustand der Mehrscheibenkupplung durch einen Hydraulik-Servomotor (C-0) gesteuert wird, durch dessen Steuerung die Mehrscheibenkupplung gemäß der Zufuhr oder Ableitung eines Hydraulikdrucks ein- oder ausgerückt wird, und einen Druckspeicher (84) zum Steuern der Hydraulikdruckzufuhr- und -ableitung für den Servomotor; wobei der Druckspeicher eine Überdruckkammer (86) und eine Rückdruckkammer (88) aufweist, wobei die Überdruckkammer mit dem Hydraulik-Servomotor kommuniziert, wohingegen die Rückdruckkammer mit einem Rückdruckregelventil (85) zum Steuern des Hydraulikdrucks in der Rückdruckkammer kommuniziert, und wobei die Rückdruckkammer über das Rückdruckregelventil mit einer Ableitleitung kommuniziert, wenn die Mehrscheibenkupplung ausgerückt wird.

## Revendications

1. Système de commande de changement pour une transmission automatique dans laquelle un ensemble de changement secondaire (1, 31), à même d'être amené à un rapport de vitesse supérieur ou à un rapport de vitesse inférieur, et un ensemble de changement primaire (2, 32), à même de régler un parmi plusieurs rapports de vitesse comprenant un rapport de vitesse inverse, sont raccordés en série et dans laquelle l'ensemble de changement secondaire (1) est réglé sur le rapport de vitesse supérieur lors d'un réglage du rapport de vitesse inverse, ***comprenant** :*
- des moyens de détection (3) de plage inverse pour détecter un changement depuis une plage neutre à une plage inverse,
- des moyens de détection (4) d'arrêt de véhicule pour détecter un véhicule à l'état arrêté
- des moyens de commande (5) de rapport de vitesse supérieur pour régler l'ensemble de changement secondaire (1) sur le rapport de vitesse supérieur lorsque, à la suite d'un réglage de l'ensemble de changement primaire (2) sur le rapport de vitesse inverse comme résultat d'un changement vers la plage inverse, le véhicule est déterminé, par un signal en provenance des moyens de détection d'arrêt de véhicule, avoir été sensiblement arrêté, et les moyens de commande de rapport de vitesse supérieur attendent pour régler l'ensemble de changement secondaire sur le rapport de vitesse supérieur jusqu'à ce que le véhicule s'est sensiblement arrêté.

2. Système de commande de changement suivant la revendication 1, caractérisé en ce que les moyens de détection d'arrêt de véhicule sont des moyens pour détecter une vitesse de rotation d'entrée vers la transmission automatique et en ce que, lorsqu'une vitesse de rotation d'entrée détectée par les moyens de détection de vitesse de rotation d'entrée n'est pas supérieure à une vitesse de rotation prédéterminée, les moyens de commande de rapport de vitesse supérieur déterminent que le véhicule s'est sensiblement arrêté et règle l'ensemble de changement secondaire sur le rapport de vitesse supérieur.

3. Système de commande de changement suivant la revendication 1 ou 2, caractérisé en ce que ledit système de commande de changement est de plus pourvu de moyens de temporisation **(T**_{**1**}**, T**_{**2**}**)** pour compter un temps à partir d'une détection d'un changement vers la plage inverse par lesdits moyens de détection de plage inverse et en ce que, lorsqu'une valeur de compte des moyens de temporisation est au moins égale à un temps prédéterminé (α, β) ou lorsque le véhicule est déterminé s'être sensiblement arrêté par un signal en provenance des moyens de détection d'arrêt de véhicule, les moyens de commande de rapport de vitesse supérieur règlent l'ensemble de changement secondaire sur le rapport de vitesse supérieur.

4. Système suivant la revendication 1 ou 2 ou 3, caractérisé en ce que l'ensemble de changement secondaire (31) comporte un embrayage à multiples plaques **(C**_{**0**}**)** libéré au rapport de vitesse supérieur, et l'embrayage à plaques multiples est commandé selon des caractéristiques de prise par un servomoteur hydraulique (C-O) qui commande la fermeture ou l'ouverture de l'embrayage à plaques multiples suivant un apport ou une purge de pression hydraulique, et un accumulateur (84) pour commander des caractéristiques d'apport et de purge de pression hydraulique pour le servomoteur, et l'accumulateur comporte un compartiment (86) à pression positive et un compartiment (88) à pression de reflux, le compartiment à pression positive étant mis en communication avec le servomoteur hydraulique tandis que le compartiment à pression de reflux est mis en communication avec une soupape de commande de pression de reflux (85) pour commander la pression hydraulique dans le compartiment à pression de reflux, et la soupape de commande de pression de reflux met en communication le compartiment à pression de reflux et une conduite de purge lors d'une ouverture de l'embrayage à plaques multiples.

5. Système de commande de changement pour une transmission automatique dans laquelle un ensemble de changement secondaire (1, 31), raccordé à un moteur (E) et à même d'être amené à un rapport de vitesse supérieur ou à un rapport de vitesse inférieur, et un ensemble de changement primaire (2, 32), à même de régler un parmi plusieurs rapports de vitesse comprenant un rapport de vitesse inverse, sont raccordés en série et dans laquelle l'ensemble de changement secondaire est réglé sur le rapport de vitesse supérieur lors d'un réglage du rapport de vitesse inverse, ***comprenant** :*
- des moyens de détection (3) de rapport inverse pour détecter un changement depuis une plage neutre à une plage inverse,
- des moyens (6) pour détecter un signal de sortie du moteur (E), et
- des moyens de commande (7) de rapport de vitesse supérieur pour régler l'ensemble de changement secondaire (1) sur le rapport de vitesse supérieur lorsqu'à la suite d'une réglage de l'ensemble de changement primaire (2) sur le rapport de vitesse inverse comme résultat d'un changement vers la plage inverse, un signal de sortie de moteur détecté par les moyens de détection de signal de sortie de moteur (6) est au moins égale à un signal de sortie prédéterminé.

6. Système de commande de changement suivant la revendication 5 caractérisé en ce que les moyens de détection de signal de sortie de moteur sont des moyens pour détecter une ouverture de papillon et en ce que, lorsque l'ouverture de papillon (v) détectée par les moyens de détection d'ouverture de papillon est au moins égale à une valeur prédéterminée, les moyens de commande de rapport de vitesse supérieur règlent l'ensemble de changement secondaire sur le rapport de vitesse supérieur.

7. Système de commande de changement suivant la revendication 5 ou 6, caractérisé en ce que le système de commande de changement est de plus pourvu de moyens de temporisation **(T**_{**1**}**, T**_{**2**}**)** pour compter un temps à partir d'une détection d'un changement vers une plage inverse par les moyens de détection de plage inverse et en ce que, lorsqu'une valeur de compte des moyens de temporisation est au moins égale à un temps prédéterminé (α, β) ou lorsqu'un signal de sortie de moteur détecté par les moyens de détection de signal de sortie de moteur est au moins égal à un signal de sortie prédéterminé, les moyens de commande de rapport de vitesse supérieur règlent l'ensemble de changement secondaire sur le rapport de vitesse supérieur.

8. Système suivant la revendication 5 ou 6 ou 7, caractérisé en ce que l'ensemble de changement secondaire (31) comporte un embrayage à multiples plaques **(C**_{**0**}**)** libéré au rapport de vitesse supérieur, et l'embrayage à multiples plaques est commandé selon des caractéristiques de prise par un servomoteur hydraulique (C-O) qui commande la fermeture ou l'ouverture de l'embrayage à plaques multiples suivant un apport ou une purge de pression hydraulique, et un accumulateur (84) pour commander des caractéristiques d'apport et de purge de pression hydraulique pour le servomoteur, et l'accumulateur comporte un compartiment à pression positive (86) et un compartiment à pression de reflux (88), le compartiment à pression positive étant mis en communication avec le servomoteur hydraulique tandis que le compartiment à pression de reflux est mis en communication avec une soupape de commande de pression de reflux (85) pour commander la pression hydraulique dans le compartiment à pression de reflux, et la soupape de commande de pression de reflux met en communication le compartiment à pression de reflux et une conduite de purge lors d'une ouverture de l'embrayage à plaques multiples.
